# EUROPEAN PATENT APPLICATION

(11) **EP 3 748 484 A1**
(43) Date of publication of application: **09.12.2020**
(21) Application number: 19212021.0
(22) Date of filing: 28.11.2019
(51) Int. Cl.: G06F 3/0482, G06F 3/0488, G06F 3/0481

(54) **MOBILE TERMINAL AND METHOD FOR DISPLAYING NOTIFICATION ON MOBILE TERMINAL**

(30) Priority: 06.06.2019 CN 201910491315
(71) Applicant: Shanghai Transsion Information Technology Limited, Shanghai Free Trade Zone (CN)
(72) Inventor: Liu, Fang, Shanghai Free Trade Zone (CN); Ren, Xinquan, Shanghai Free Trade Zone (CN); Zou, Chengshen, Shanghai Free Trade Zone (CN)
(74) Representative: Petraz, Gilberto Luigi

(57) **Abstract**

The present disclosure provides a mobile terminal and a method for displaying a notification on a mobile terminal. The mobile terminal, having a plurality of applications, and for receiving notifications of the plurality of applications, includes: a first display area, displayed on a screen of the mobile terminal, and used to display the received notifications; and a container icon, generated in response to the number of the received notifications being more than one, and displayed in the first display area, the container icon being used to accommodate the notifications of the plurality of applications.

## Description

### CROSS-REFERENCE TO RELATED APPLICATION

The present disclosure claims the benefits and priority to Chinese Patent Application with No. 201910491315.3, filed on June 6, 2019, the entire disclosure of which is hereby incorporated by reference, in its entirety, for all that it teaches and for all purposes.

### FIELD

The present disclosure relates to the field of mobile terminals, and more particularly relates to a mobile terminal and a method for displaying a notification on a mobile terminal.

### BACKGROUND

A status bar, a common page of a mobile terminal, is generally arranged at the top or bottom of the screen of the mobile terminal, in order to display a current status of the mobile terminal, thereby providing relevant information for users. In particular, the status bar can be used to display notification icons corresponding to notifications received by the mobile terminal, from which users can know how many notifications that have been received.

Currently, when the mobile terminal receives a plurality of notifications, the notification icons corresponding to all of the received notifications are displayed one by one in the status bar according to a certain order. However, if the number of the notifications icons is too large, the total length of all the notification icons may exceed the length of the status bar, causing it impossible to display all the notification icons in the status bar, such that users cannot acquire all of the notifications; also, if too much content is displayed in the status bar, users are prone to miss important information, both of which greatly affects user experience.

### SUMMARY

The present disclosure provides a mobile terminal and a method for displaying a notification on a mobile terminal, aiming to assist users to acquire all the notifications received by the mobile terminal, thereby improving user experience.

In one aspect, the present disclosure provides a mobile terminal. The mobile terminal, having a plurality of applications and being capable of receiving notifications of the plurality of applications, includes: a first display area, displayed on a screen of the mobile terminal, and configured to display the notifications received by the mobile terminal; and a container icon, generated in response to the number of the notifications received by the mobile terminal being more than one, and displayed in the first display area, the container icon being configured to accommodate the notifications of the plurality of applications.

Optionally, the container icon includes an expandable list. The expandable list is configured to expand in response to a click on the container icon, to display notification icons corresponding to the notifications accommodated in the expandable list, and the notification icons in the expandable list that is expanded are operable.

Optionally, the mobile terminal further includes: a second display area, configured to display one or more of multimedia data, text data, and an application icon of the mobile terminal; content of the notification corresponding to one of the notification icons is displayed in the second display area, in response to clicking the one of the notification icons in the expandable list that is expanded.

Optionally, the number of rows of the expandable list is equal to the number of the notifications received by the mobile terminal, and each of the rows is configured to accommodate one of the notification icons corresponding to the notifications.

Optionally, the container icon is generated in response to the number of the notifications received by the mobile terminal being two or more than two, and the notification icons corresponding to all of the notifications received by the mobile terminal are accommodated in the expandable list of the container icon.

Optionally, the top of the screen is concave. The first display area is arranged at the top of the screen, including a first area and a second area separated by the concave portion of the top of the screen.

Optionally, the notifications and the container icon are displayed in the first area, or displayed in the second area.

In another aspect, the present disclosure provides a method for displaying a notification on a mobile terminal which has a plurality of applications. The method includes: receiving, by the mobile terminal, at least one of notifications of the plurality of applications; generating, by the mobile terminal, a container icon, in response to the number of the notifications received by the mobile terminal being more than one; and accommodating, by the container icon, the received notifications of the plurality of applications.

Optionally, the method includes: generating, by the mobile terminal, the container icon, in response to the mobile terminal receiving a second one of the notifications; and accommodating, by the container icon, the two of the notifications received by the mobile terminal.

Optionally, the method includes: generating, by the mobile terminal, the container icon, in response to the mobile terminal receiving a second one of the notifications; and placing, the two of the notifications received by the mobile terminal in the container icon.

Optionally, after the operation of accommodating, by the container icon, the received notifications of the plurality of applications, the method further includes: accommodating, by the container icon, subsequent ones of the notifications received by the mobile terminal, in response to the mobile terminal receiving the subsequent ones of the notifications.

Optionally, the container icon includes an expandable list, and the expandable list is configured to accommodate the received notifications of the plurality of applications.

Optionally, the method further includes: displaying notification icons corresponding to the notifications accommodated in the container icon, in response to a click on the container icon.

Optionally, the method further includes: displaying, by the expandable list, notification icons corresponding to the notifications accommodated in the container icon, in response to a click on the container icon.

Optionally, the method further includes: determining the number of the notifications received by the mobile terminal; and accommodating notification icons corresponding to the notifications in the expandable list of the container icon, in response to the number of the notifications being more than one.

Optionally, the container icon is displayed in a first display area of the mobile terminal.

Optionally, the mobile terminal further includes a second display area, configured for displaying one or more of multimedia data, text data, and an application icon of the mobile terminal. Accordingly, the method further includes: displaying content of one of the notifications in the second display area, in response to a click on the one of the notifications received by the mobile terminal.

Optionally, the method further includes: displaying content of one of the notifications in the second display area, in response to a click on the one of the notifications in the container icon.

In accordance with the present disclosure, the container icon is displayed in the first display area with the notification icons accommodated therein, such that the width of the first display area occupied by the notification icons can be minimized, and users can be prevented from missing important information due to too many notification icons displayed in the first display area. Further, in case that the screen of the mobile terminal is shaped, and the first display area is divided into the first area and the second area, by setting the condition of accommodating the notification icons in the expandable list of the container icon, the first display area can only display a small number of notification icons with none of the notifications icons being blocked by the shaped screen; or, the first display area only needs to display the container icon. Therefore, the mobile terminal and the method for displaying a notification on a mobile terminal provided in the present disclosure can make the first display area simple and concise, which prevents any of the notification icons from being block by the shaped screen, thus are also suitable for shaped screens.

Further, on condition that the first display area is divided into two areas by the concave portion, the container icon and the notification icons are displayed in one of the two areas separated by the concave portion, which enables users to access the notifications more centrally, thereby improving the user experience.

### BRIEF DESCRIPTION OF THE DRAWINGS

FIG. 1 is a diagram illustration of an embodiment showing a mobile terminal in the present disclosure;
FIG. 2 is a diagram illustration of an embodiment showing a notification icon displayed in a first display area in the present disclosure;
FIG. 3 is a diagram illustration of an embodiment showing a container icon displayed in a first display area in the present disclosure;
FIG. 4 is a flowchart illustration of an embodiment showing a method for displaying a notification on a mobile terminal in the present disclosure.

### DETAILED DESCRIPTION OF THE EMBODIMENTS

It will be appreciated that the specific embodiments described herein are merely illustrative of the present disclosure and are not intended to limit the present disclosure.

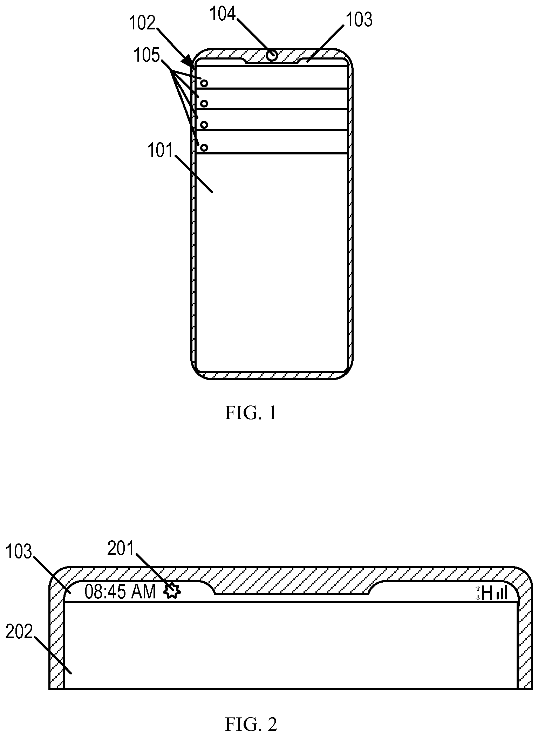

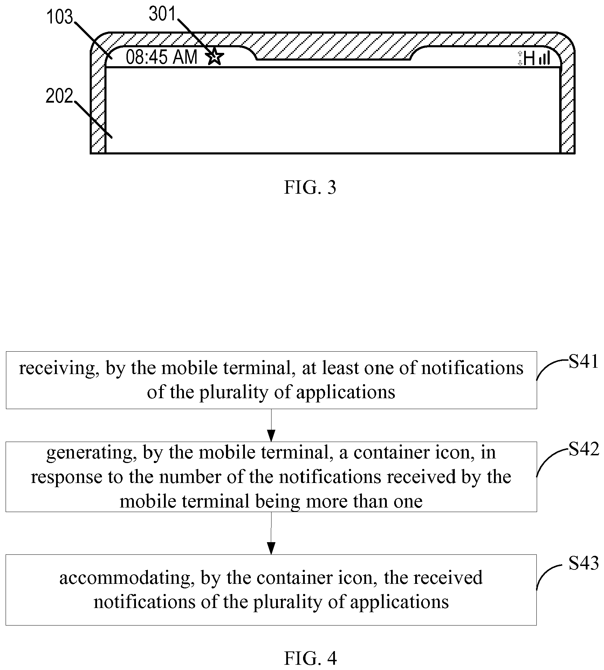

Referring to FIGS. 1 to 3, FIG. 1 is a diagram illustration of an embodiment showing a mobile terminal in the present disclosure, FIG. 2 is a diagram illustration of an embodiment showing a notification icon displayed in a first display area in the present disclosure, and FIG. 3 is a diagram illustration of an embodiment showing a container icon displayed in a first display area in the present disclosure.

In an embodiment, the mobile terminal, having a plurality of applications, and for receiving notifications of the plurality of applications, and displaying notification icons 201 corresponding to the notifications on a screen 101 of the mobile terminal, includes: a first display area 103, displayed on the screen 101, and used to display the notifications received by the mobile terminal; and a container icon 301, generated on condition that the number of the notifications received by the mobile terminal is more than one, and displayed in the first display area 103, where the container icon 301 is used to accommodate the notifications received by the mobile terminal.

In an embodiment, the mobile terminal includes an equipment that has the first display area 103 and is capable of receiving the notifications, such as a mobile phone, a tablet, a laptop, a desktop computer. In this embodiment, the first display area 103 is a status bar of the mobile phone or the like.

In the embodiments as shown in FIGS. 1 to 3, the mobile terminal includes a camera 104 arranged at the center of the top of the screen 101. The top of the screen 101 is concave, and the concave portion is configured to place the camera 104. The first display area 103 is arranged at the top of the screen 101, including a first area and a second area that are separated by the concave portion at the top of the screen 101.

In another embodiments, the concave portion at the top of the screen 101 may be used to place other components of the mobile terminal, such as a fingerprint recognition component, etc., which can be set as desired. In the embodiments shown in FIGS. 1 to 3, the concave portion is arranged at the center of the top of the screen 101, such that the first area and the second area are of equal length. In another embodiments, the concave portion may be arranged at a non-center position of the top of the screen 101, and accordingly the first display area 103 is divided into the first area and the second area of unequal length.

In this embodiment, the first display area 103 is used to display the notification icon 201 and the container icon 301. The first display area 103 can be pullable down, to make room for the container icon 301 to be clicked and the expandable list 102 to be expand. In another embodiments, the first display area 103 may be arranged at another position on the screen 101 as needed, such as at the bottom of the screen 101, a side of the screen 101. And correspondingly, the display area 103 may be arranged to be pullable up, or pullable left or right, to illustrate abbreviated information of the notification icon 201 or abbreviated information of the container icon 301 displayed in the first display area 103. In this embodiment, arranging the first display area 103 on the top of the screen 101 is more in line with user's usage habits, as it is easier for users to notice the first display area 103, to acquire information displayed in first display area 103.

In an embodiment, the first display area 103 may also be used to display time and functional states of the mobile terminal. In an embodiment, the first area is used to display the time and the container icon 301, or the time and the notification icon 201; and the second area is used to display the functional states of the mobile terminal. In an embodiment, the functional states include signal strength of the mobile terminal, wifi strength of an environment in which the mobile terminal is located, and remaining power of the mobile terminal. It can be understood that contents displayed in the second area may be set as needed. In the embodiments shown in FIGS. 2 and 3, the second area displays the functional states of the signal strength and the network standard.

In another embodiments, the second area may be used to display the time and the container icon 301, or the time and the notification icon 201; and correspondingly, the first area is used to display the functional states of the mobile terminal.

In an embodiment, the container icon 301 includes an expandable list 102. The expandable list 102 is used to expand in response to a click on the container icon 301, to display the notification icons 201 corresponding to the notifications accommodated in the expandable list 102, such that users can operate the notification icons 201 in the expandable list 102 that is expanded.

In an embodiment, the container icon 301 is generated in response to the number of the notifications received by the mobile terminal being two or more than two, and the notification icons 201 corresponding to all the notifications are accommodated in the expandable list 102 of the container icon 301. By this way, the maximum number of the notification icons 201 displayed in the first display area 103 is one, which minimizes the length of the notification icons 201 displayed in the first display area 103, thereby making the first display area 103 clear and concise.

In another embodiments, the container icon 301 is generated in response to the number of the notifications received by the mobile terminal being N (N≥3, N is an integer). Herein, the maximum number of the notification icons 201 that can be displayed in the first display area 103 is N-1.

In this embodiment, in case that a plurality of notification icons 201 are simultaneously displayed in the first display area 103, the plurality of notification icons 201 are sequentially arranged in the first display area 103.

It should be noted that, in the embodiments shown in FIGS. 1 to 3, the first display area 103 is divided into the first area and the second area by the concave portion, thus when the number of notification icons 201 is set to be the maximum number, it should be considered that whether any of the notification icons 201 is arranged between the first area and the second area, because any of the notification icons 201 arranged between the first area and the second area is blocked by the concave portion, which affect users' information acquisition.

The maximum number of the notification icons 201 that can be displayed in the first display area 103 is limited by the distribution of the notification icons 201 in the first display area 103, the size of each of the notification icons 201, the length of the first area and the length of the second area. For example, in case that the notification icons 201 are arranged from the forefront of the first area, the maximum number of the notification icons 201 that can be displayed in the first display area 103 is determined by the length of the first area and the size of each of the notification icons 201.

In this embodiment, the notification icons 201 and the container icon 301 are alternatively displayed in the first display area 103. As the number of the notification icons 201 is more than one, all the notification icons 201 are accommodated in the expandable list 102 of the container icon 301, and the notification icons 201 are no longer displayed in the first display area 103. In this way, the first display area 103 can be ensured to be clear and concise, and is thereby convenient for users to acquiring information.

In another embodiments, the container icon 301 is generated in response to the number of the notifications received by the mobile terminal being N or more than N. In an embodiment, the first N-1 notification icons 201 are displayed in the first display area 103, and the subsequent notification icons 201 after the first N-1 notification icons 201 are accommodated in the expandable list 102 of the container icon 301. In this case, the first display area 103 simultaneously displays the notification icons 201 and the container icon 301. It should be noted that, the size of the container icon 301 should also be taken into account when considering the value of N, so as to prevent the container icon 301 and the notification icons 201 from being blocked by the concave portion.

In an embodiment, the notification icons 201 and the container icon 301 are all displayed in the first area, or all in the second area. In the embodiments shown in FIGS. 1 to 3, the notification icons 201 and the container icon 301 are all displayed in the first area, such that users can simply scan the first area to quickly acquire the information of the notification icons 201 and the container icon 301. In another embodiments, the notification icons 201 and the container icon 301 are displayed in the first area and in the second area, respectively; in this case, users need to scan the two areas on two sides of the concave portion to acquire the information of the notification icons 201 and the container icon 301, which is inconvenient. However, in case that the first display area 103 simultaneously displays the container icon 301 and the notification icons 201, the maximum number of the notification icons 201 that can be displayed in the first area or in the second area is increased.

In an embodiment, the container icon 301 should be significantly different from the notification icon 201, to help users to easily know the information of the notification icon 201 and the container icon 301 in the first display area 103.

The number of rows of the expandable list 102 is equal to the number of the notifications received by the mobile terminal, and each of the rows accommodates one of the notification icons 201. In this embodiment, the number of the rows of the expandable list 102 is at least two.

Referring to FIG. 1, displaying the expandable list 102 of the container icon 301 on the screen 101 is to display a plurality of columns 105 arranged in the first display area 103 that is pulled down. The number of the columns 105 is equal to the number of the rows of the expandable list 102, and each of the columns 105 correspondingly displays each of the rows of the expandable list 102. As the number of the rows of the expandable list 102 is at least two, there are at least two columns 105 displayed on the screen 101, in response to a click on the container icon 301.

After the first display area 103 is pulled down, the container icon 301 can be clicked for selection. The expandable list 102 is expanded in response to a click on the container icon 301, so as to display the notification icons 201 accommodated in the expandable list 102. In addition, users can operate the notification icons 201 in the expandable list 102 that is expanded.

In an embodiment, the operations performed by a user on any of the notification icons 201 accommodated in the expandable list 102 includes: clicking the notification icon 201, acquiring the content of the notification corresponding to the clicked notification icon 201, where the notification icon 201 is cleared after the click; swiping left or right the notification icon 201, where the notification icon 201 is cleared.

In an embodiment, the mobile terminal further includes a second display area 202, configured to display one or more of multimedia data, text data, and application icons of the mobile terminal. The content of the notification corresponding to one of the notification icons 201 in the expandable list 102 is displayed in the second display area 202, in response to a click on the notification icon 201. In this embodiment, the second display area 202 is an area below the first display area 103.

In an embodiment, the mobile terminal further includes a clear button, used to clear all of the notification icons 201 accommodated in the expandable list 102. On condition that the notification icons 201 in the expandable list 102 are all cleared or are cleared to only N-1 items, the container icon 301 is cleared. Specifically, if all the notification icons 201 in the expandable list 102 are cleared, the container icon 301 is cleared when the first display area 103 is out of the pull-down state; or if the notification icons 201 in the expandable list 102 are cleared to only N-1 items, the remaining N-1 notification icons 201 are displayed in the first display area 103, and the container icon 301 is cleared when the first display area 103 is out of the pull-down state.

In an embodiment, the clear button may also be used to clear the container icon 301, such that all the notifications in the container icon 301 can be cleared without expanding the expandable list 102 of the container icon 301.

The present invention also provides a method for displaying a notification on a mobile terminal. Referring to FIG. 4, FIG. 4 is a flowchart illustration of an embodiment showing a method for displaying a notification on a mobile terminal in the present disclosure.

In this embodiment, the method for displaying a notification on a mobile terminal includes: S41, receiving, by the mobile terminal, at least one of notifications of the plurality of applications; S42, generating, by the mobile terminal, a container icon 301, on condition that the number of the notifications received by the mobile terminal is more than one; and S43, accommodating, by the container icon 301, the received notifications.

In an embodiment, the mobile terminal generates the container icon 301 when the mobile terminal receives a second one of the notifications, and the two notifications that have been received are automatically accommodated in the container icon 301. Further, notifications that are subsequently received by the mobile terminal are automatically accommodated in the container icon 301, in response to the mobile terminal receiving the subsequent notifications. Therefore, the maximum number of the notification icons 201 displayed on the mobile terminal is one, which makes the display interface clear and concise.

In another embodiment, the container icon 301 is generate on condition that the number of the notifications received by the mobile terminal is N (N≥3, N is an integer), where the maximum number of the notification icons 201 that can be in the first display area 103 is N-1. Generally, the size of the notification icon 201 should be considered when defining the maximum number of the notifications that can be displayed in the first display area 103. For example, in an embodiment, on condition that the container icon 301 and the notification icons 201 are all displayed in the first display area 103 of the mobile terminal, the maximum number of the notification icons 201 that can be displayed in the first display area 103 is determined by the length of the first display area 103 and the size of the notification icon 201.

In an embodiment, the screen 101 of the mobile terminal has a concave portion, which is a shaped screen. The first display area 103 is disposed at a position where the concave portion is arranged, and thus is blocked by the concave portion. In this case, when considering the maximum number of the notification icons 201 that can be displayed in the first display area 103, the length of each of the segments separated by the concave portion should be considered, so as to ensure that when the maximum number of the notification icons 201 are displayed in the first display area 103, no notification icon is blocked by the concave portion.

In the embodiments shown in FIGS. 1 to 3, the top of the screen 101 is concave, and the concave portion is used for placing the camera 104. The first display area 103 is arranged at the top of the screen 101, including the first area and the second area separated by the concave portion. The container icon 301 is displayed in the first area or in the second area, thus is not blocked by the concave portion at the top of the screen 101, thereby preventing users from missing any of the notifications.

Further, by setting the maximum number of the notification icons 201 displayed in the first display area 103, the notification icons 201 can be ensured to display only in the first area without extending to the second area, or only in the second area without extending to the first area, which prevents the notification icons 201 from being blocked by the concave portion, thereby making it possible for users to notice all the received notifications, and making the display interface of the mobile terminal clear and concise.

In this embodiment, in case that N=2, the container icon 301 and the notification icons 201 are displayed alternatively. On condition that the container icon 301 is displayed, all the notification icons 201 corresponding to the subsequently received notifications are accommodated in the container icon 301, which makes the interface simple and easier for users to acquire the information.

In another embodiment, if the container icon 301 is generated in response to the number of the notifications received by the mobile terminal being N, where N is three or more than three, the first N-1 notification icons 201 are still displayed in the first display area 103, while the notification icons 201 received subsequently are accommodated in the expandable list 102 of the container icon 301. As such, the first display area 103 simultaneously displays the notification icons 201 and the container icon 301. Thus, when considering the value of N, it is also necessary to take into consideration the size of the container icon 301, to prevent the container icon 301 and the notification icons 201 from being blocked by the concave portion.

In an embodiment, the mobile terminal generates the container icon 301, when the mobile terminal receives a second one of the notifications, and users can manually place the two notifications that have been received in the container icon 301. In this way, users can operate the notification icons 201 in diverse ways, for example, users can place the notification icon 201 that is not intended to be directly displayed on the interface in the container icon 301.

the operation icon of the notification icon corresponding to the notification of the application received by the mobile terminal by the user is more abundant, and the notification icon not intended to be directly displayed on the display interface of the mobile terminal can be completely inserted into the Inside the container icon 301.

In an embodiment, the container icon 301 includes an expandable list 102 in which the notification icons 201 corresponding to the received notifications are accommodated. In an embodiment, the expandable list 102 is expanded in response to a click on the container icon 301, to display all the notification icons 201 corresponding to the notifications accommodated in the container icon 301.

In an embodiment, the notification icons 201 corresponding to the notifications accommodated in the container icon 301 are displayed, in response to a click on the container icon 301.

In an embodiment, the number of the notifications received by the mobile terminal is determined, and the notification icons 201 corresponding to the notifications are accommodated in the expandable list 102 of the container icon 301, if the number of the notifications is more than one.

In an embodiment, the mobile terminal further includes a second display area 202, used to display one or more of multimedia data, text data, and application icons of the mobile terminal. The content of the notification is displayed in the second display area 202, in response to a click on the notification received by the mobile terminal.

In an embodiment, the content of the notification is displayed in the second display area 202, in response to a click on the notification in the container icon 301.

The foregoing description merely portrays some illustrative embodiments in accordance with the disclosure and therefore is not intended to limit the patentable scope of the disclosure. Any equivalent structure or flow transformations that are made taking advantage of the specification and accompanying drawings of the disclosure and any direct or indirect applications thereof in other related technical fields shall all fall in the scope of protection of the disclosure.

## Claims

1. A mobile terminal, having a plurality of applications, and for receiving notifications of the plurality of applications, **characterized by**, the mobile terminal comprising:
a first display area (103), displayed on a screen (101) of the mobile terminal, and configured to display the notifications received by the mobile terminal; and
a container icon (301), generated in response to the number of the notifications received by the mobile terminal being more than one, and displayed in the first display area (103), the container icon (301) being configured to accommodate the notifications of the plurality of applications.

2. The mobile terminal of claim 1, **characterized by**, the container icon (301) comprising an expandable list (102); wherein the expandable list (102) is configured to expand in response to a click on the container icon (301), to display notification icons (201) corresponding to the notifications accommodated in the expandable list (102), and the notification icons (201) in the expandable list (102) which is expanded are operable.

3. The mobile terminal of claim 2, **characterized by**, the mobile terminal further comprising:
a second display area (202), configured to display one or more of multimedia data, text data, and an application icon of the mobile terminal;
content of the notification corresponding to one of the notification icons (201) is displayed in the second display area (202), in response to a click on the one of the notification icons (201) in the expandable list (102) which is expanded.

4. The mobile terminal of claim 2, **characterized by**, the number of rows of the expandable list (102) being equal to the number of the notifications received by the mobile terminal, and each of the rows being configured to accommodate one of the notification icons (201) corresponding to the notifications.

5. The mobile terminal of claim 2, **characterized by**, the container icon (301) being generated in response to the number of the notifications received by the mobile terminal being two or more than two, and the notification icons (201) corresponding to all of the notifications received by the mobile terminal being accommodated in the expandable list (102) of the container icon (301).

6. The mobile terminal of claim 1, **characterized by**, the top of the screen (101) being concave; and the first display area (103) being arranged at the top of the screen (101), comprising a first area and a second area separated by the concave portion of the top of the screen (101).

7. The mobile terminal of claim 6, **characterized by**, the notifications and the container icon (301) being displayed in the first area, or displayed in the second area.

8. A method for displaying a notification on a mobile terminal, the mobile terminal having a plurality of applications, **characterized by**, the method comprising:
receiving (S41), by the mobile terminal, at least one of notifications of the plurality of applications;
generating (S42), by the mobile terminal, a container icon (301), in response to the number of the notifications received by the mobile terminal being more than one; and
accommodating (S43), by the container icon (301), the received notifications of the plurality of applications.

9. The method of claim 8, **characterized by**, the method comprising:
generating, by the mobile terminal, the container icon (301), in response to the mobile terminal receiving a second one of the notifications; and
accommodating, by the container icon (301), the two of the notifications received by the mobile terminal.

10. The method of claim 8, **characterized by**, the method comprising:
generating, by the mobile terminal, the container icon (301), in response to the mobile terminal receiving a second one of the notifications; and
placing, the two of the notifications received by the mobile terminal in the container icon (301).

11. The method of any one of claims 8 to 10, **characterized by**, after the operation of accommodating, by the container icon (301), the received notifications of the plurality of applications (S43), the method further comprising:
accommodating, by the container icon (301), subsequent ones of the notifications received by the mobile terminal, in response to the mobile terminal receiving the subsequent ones of the notifications.

12. The method of claim 8, **characterized by**, the container icon (301) comprising an expandable list (102), and the expandable list (102) being configured to accommodate the received notifications of the plurality of applications.

13. The method of claim 8, **characterized by**, the method further comprising:
displaying notification icons (201) corresponding to the notifications accommodated in the container icon (301), in response to a click on the container icon (301).

14. The method of claim 12, **characterized by**, the method further comprising:
displaying, by the expandable list (102), notification icons (201) corresponding to the notifications accommodated in the container icon (301), in response to a click on the container icon (301).

15. The method of claim 12, **characterized by**, the method further comprising:
determining the number of the notifications received by the mobile terminal; and
accommodating notification icons (201) corresponding to the notifications in the expandable list (102) of the container icon (301), in response to the number of the notifications being more than one.

16. The method of claim 8, **characterized by**, the container icon (301) being displayed in a first display area (103) of the mobile terminal.

17. The method of claim 8, **characterized by**, the mobile terminal further comprising a second display area (202), configured for displaying one or more of multimedia data, text data, and an application icon of the mobile terminal; and
the method further comprising:
displaying content of one of the notifications in the second display area (202), in response to a click on the one of the notifications received by the mobile terminal.

18. The method of claim 17, **characterized by**, the method further comprising:
displaying content of one of the notifications in the second display area (202), in response to a click on the one of the notifications in the container icon (301).
